# EUROPEAN PATENT SPECIFICATION

(11) **EP 2 848 118 B1**
(45) Date of publication and mention of the grant of the patent: **05.04.2017**
(21) Application number: 14184288.0
(22) Date of filing: 10.09.2014
(51) Int. Cl.: A01K 87/00, A01K 87/04

(54) **Line guide for fishing pole**
Schnurführung für Angelrute
Guide-fil pour canne à pêche

(30) Priority: 11.09.2013 GB 201316142
(43) Date of publication of application: 18.03.2015
(73) Proprietor: Frenzee Limited, Newtown, Powys SY16 4LE (GB)
(72) Inventor: Bancroft, Brian Roy, Treowen, Newtown, Powys SY16 1NP (GB); Pryce, John Michael, Kerry, Newtown, Powys SY16 4NU (GB)
(74) Representative: Makovski, Priscilla Mary

(56) References cited:
- EP-A1- 1 967 065
- DE-A1- 3 622 936
- FR-A1- 2 518 870
- JP-A- S5 075 881
- JP-U- S5 832 975

## Description

This invention relates to a line guide for a fishing pole. In particular, but not exclusively, this invention relates to a guide for enabling side pulling of elastic from a fishing pole section.

A fishing pole comprises several detachable elongate hollow sections, with a fishing line fixed to the tip of the end section. The top end of the fishing pole is defined as the end of the pole that the fishing line is attached to.

In some fishing poles, the fishing line may be fixed to elastic, which runs through the top two detachable sections of the pole. As a fish pulls on the line, the elastic is stretched. Pulling on the elastic tires the fish and makes it easier for the angler to land it. In certain poles with elastic, one of the sections may be configured to allow the angler to pull on the elastic, in the opposite direction to a fish, allowing the fish to be landed quickly and giving the angler more control over the fish. This is usually achieved through a hollow bung provided within a section of the pole. The angler removes the bottom sections of the pole and pulls the elastic from the end of one of the top sections. Alternatively, in a side-pulling pole, a hole is provided in the side of one of the top sections. The elastic is fed through the hole and to the outside of the pole and can be pulled without having to remove the bottom sections.

In side-pulling poles, the elastic can be worn very quickly due to friction between the elastic and the sides of the hole. One solution has been to provide a lining around the hole that reduces the friction between the sides of the hole and the elastic. Another solution has been to provide an elongate slot through which the elastic is fed, rather than a hole. The interior surface of the slot can be shaped to guide the elastic from out of the pole section and may be made from a suitable low friction material. These mechanisms have proved unsatisfactory at reducing wear of the elastic.

Another, alternative, solution is to ensure the elastic runs down the centre of the pole section before passing out of a hole. This locates the elastic more precisely and is achieved by a bung which is provided inside the pole section. The bung has a roller over which the elastic passes, before passing out of a hole. Such a bung can be complicated and time consuming to install and adds unwanted weight to the pole.

DE 36 22 936 A1 and JP S58 32975 U disclose line guides for hollow fishing rods. FR 2 518 870 A1 discloses a line guide for a fishing pole.

According to a first aspect of the invention we provide a guide for a line of a fishing pole, the guide being adapted for insertion in a wall of a hollow fishing pole and comprising, as stated in claim 1, a body formed with a through passage, at least one peripheral edge portion of the through passage being chamfered; and a rotatable member mounted in the body for rotation in the passage such that, in use, the line passes from the inside of the pole over the surface of the rotatable member and between the rotatable member and the at least one chamfered edge portion to the outside of the pole.

This is advantageous because the line is guided smoothly from the inside to the outside of the pole, by the rotatable member and the chamfered edge portion, which reduces friction on the line and therefore wear. This is especially advantageous where the line is of elastic. The reduction in frictional forces also means that the angler has greater control.

Conveniently the body and the through passage each have an elongate outline, in the direction of the length of the fishing pole.
The rotatable member may be mounted for rotation about an axis transverse to the length of the body and through passage. The rotatable member is rotated by movement of the line into and out of the fishing pole. The rotatable member may be a wheel with a concave profile. The line sits within the concave profile, and is therefore guided by it. This construction is very simple, and is lightweight, so that it does not add significantly to the weight of the fishing pole.

The through passage may comprise a pair of elongate sides joined by a pair of end portions and the at least one chamfered edge portion may be formed in an end portion of the through passage. The chamfered edge portion is conveniently at the end of the through passage adjacent to the bottom of the fishing pole. The line is therefore guided out of the pole between the chamfered edge portion and the rotatable member without a right angle, to provide a reduction in friction. The chamfered edge portion may have any appropriate profile, such as straight, curved, or a combination.
The body is adapted for mounting in a complementary aperture in the wall of the fishing pole. The body may have a main part adapted to be received in the aperture, and a flange which engages with the external surface of wall. This means that the guide is easy to install from the outside of the fishing pole, and it does not require parts to be located within the fishing pole itself.
The guide may be permanently fixed to the fishing pole. Alternatively, it may be detachable. It may be retrofitted to an existing fishing pole, and if detachable can be removed for replacement or repair.

According to a second aspect of the invention, we provide a kit of parts comprising, as stated in claim 12, at least one hollow section of a fishing pole having an aperture in a wall, and a guide adapted for insertion in the aperture, the guide comprising a body formed with a through passage, at least one peripheral edge portion of the through passage being chamfered, and a rotatable member mounted in the body for rotation in the passage.

According to a third aspect of the invention, we provide a fishing pole as stated in claim 9. The present disclosure is also related to a method of installing a guide for a line of a fishing pole having hollow sections, comprising:
providing an aperture in a wall of a section of the fishing pole;
inserting into the aperture a guide comprising a body formed with a through passage, at least one peripheral edge portion of the through passage being chamfered, and a rotatable member mounted in the body for rotation in the passage; and
threading a line from the inside of the fishing pole section over the rotatable member and between the rotatable member and the chamfered edge portion to the outside of the fishing pole section.

An embodiment of the invention is illustrated, by way of example only, in the accompanying drawings, in which:-
**Figure 1** is a perspective view of a guide for a line of a fishing pole according to the invention;
**Figure 2** is a side view of the guide of Figure 1;
**Figure 3** is an underneath view of the guide of Figure 1;
**Figure 4** is an end view of the guide of Figure 1;
**Figure 5** is a section along the line 5-5 of Figure 3; and
**Figure 6** is a section along the line 6-6 of Figure 2.

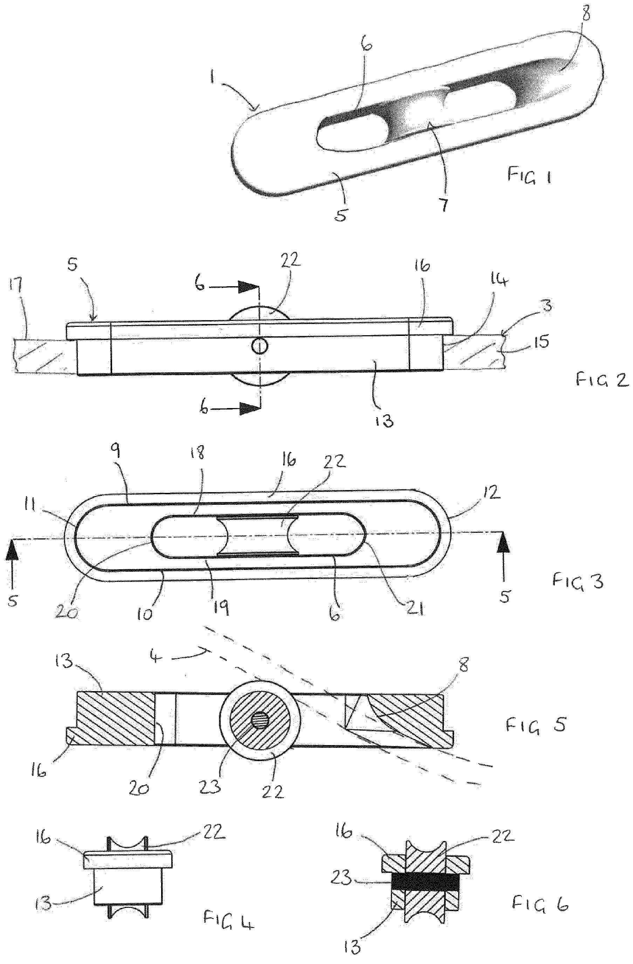

The Figures show a guide 1 for a line of a fishing pole 3, only part of which is shown in Figure 2. The pole 3 has several detachable elongate hollow sections, with a fishing line (not shown) fixed to the tip of a top end section. The fishing line is fixed to an elastic line 4, which runs down the centre of the pole 3 to the guide 1, where it passes to the outside of the pole 3. This type of pole is known as a side-pulling pole, and it enables the angler to pull on the elastic line 4 when a fish has been hooked. This tires the fish and makes it easier to land.

The guide 1 comprises a body 5, having a through passage 6 in which is mounted a rotatable member 7. A peripheral edge portion 8 of the through passage 6 is chamfered, and the elastic line 4 passes from the inside of the pole 3 to the outside round the rotatable member 7 and between the rotatable member 7 and the chamfered edge portion 8.

The body 5 is of a suitable plastics material, such as a low friction material, and made in any suitable way. It is of elongate outline and is disposed with the elongate direction along the length of the pole 3. The body 5 has a pair of opposing elongate sides 9, 10 joined by semicircular end portions, 11, 12. A main part 13 of the body 5 is adapted to fit in a complementary aperture 14 in the pole wall 15. A flange 16 provided round the outer edge of the main part 13 is adapted to engage with the external surface 17 of the pole wall 15.

The through passage 6 is similarly elongate, with a pair of opposing elongate sides 18, 19 connected by semicircular ends 20, 21. As best seen in Figure 5, the end 20 has a straight side, perpendicular to the plane of the flange 16, while the end 21 has the chamfered edge portion 8. The portion 8 has a curved profile to provide a smooth guide path for the elastic line 4 between the inside and outside of the pole 3.

The rotatable member 7 comprises a wheel 22 mounted in the through passage 6 for rotation about an axis transverse to the length of the pole 3. The wheel 22 is also of plastics, and is mounted for free rotation on a transverse rod 23, which extends across the centre of the through passage 6 and is attached to the sides 9, 10 of the body 5 just below the flange 16. The wheel 22 is mounted centrally in the body 5, and projects both slightly above the flange 16 at the outer edge of the body 5 and below the body 5 at its inner edge inside the pole 3.

Figures 3, 4 and 6 show the profile of the wheel 22 to be concave, to guide the elastic line 4 consistently as it moves in and out of the pole 3. The wheel 22 is rotated by movement of the elastic line 4 in each direction.

The construction of the guide 1 is simple and lightweight. It will be appreciated that it is easy to install in a pole 3, as it can simply be inserted into an appropriate aperture from the outside of the pole 3, with the chamfered portion 8 adjacent the bottom end of the pole 3.

In use, once the guide 1 is inserted in the pole 3, the angler threads the elastic line 4 from the inside of the pole 3 round the wheel 22 and between the wheel and the chamfered portion 8. The end of the elastic line 4 will then be knotted to prevent it running through the guide 1 to the inside of the pole 3.

When the angler hooks a fish he will pull on the elastic line 4 to play the fish and tire it, making it easier to land. As the angler pulls the elastic line 4 out of the pole 3 it runs round the wheel 22, causing it to rotate. The elastic line 4 is guided by the wheel 22 and the chamfered portion 8. As the angler releases the tension on the elastic line 4 it runs back into the pole 3, rotating the wheel 22 in the opposite direction. The elastic line 4 is guided by the chamfered portion 8 and the wheel 22 in this direction as well. The combination of the wheel 22 and the chamfered portion 8 reduces the frictional forces acting on the elastic line 4 so that it runs smoothly. The angler can vary the angle of the elastic line 4 outside the pole 3. Some may wish to pull the elastic line 4 at right angles to the pole 3, while other may prefer to take the elastic line 4 back towards the top of the pole 3 for greater control. The wheel 22 enables the angle to be varied without excessive wear on the elastic line 4. The arrangement therefore gives the angler greater control, and reduces the wear on the elastic line 4.

The chamfered portion 8 is shown in the Figures as being curved. In a modification, not shown, it could be straight, but still angled in comparison with the perpendicular end 20, or a combination of straight and curved, as required to provide the reduced frictional force and guide characteristics.

The guide 1 may be provided as part of a pole 3 on initial manufacture, or it may be retrofitted to an existing pole, which would be modified by the provision of a suitable aperture. It is conveniently detachable to provide for easy replacement or repair.

The guide 1 may also be provided as part of a kit comprising a pole section formed with a suitable aperture, and designed to replace a section of an existing pole.

## Claims

1. A guide (1) for a line (4) of a fishing pole (3), the guide (1) being adapted for insertion in a wall (15) of a hollow fishing pole (3) and comprising:
a body (5) formed with a through passage (6), at least one peripheral edge portion (8) of the through passage (6) being chamfered; and **characterised in that** the guide further comprises
a rotatable member (7) mounted in the body (5) for rotation in the passage (6) such that, in use, a line (4) passes from the inside of the pole (3) over the surface of the rotatable member (7) and between the rotatable member (7) and the at least one chamfered edge portion (8) to the outside of the pole (3).

2. A guide (1) according to Claim 1, wherein the body (5) and the through passage (6) each have an elongate outline, and wherein the guide (1) is adapted for insertion into the wall (15) of fishing pole (3) such that the body (5) and through passage (6) are elongate in the direction of the length of the fishing pole (3).

3. A guide (1) according to Claim 2, wherein the rotatable member (7) is mounted for rotation about an axis transverse to the length of the body (5) and the through passage (6).

4. A guide (1) according to any preceding Claim, wherein the rotatable member (7) is arranged to be rotated by movement of the line (4) through the through passage (6).

5. A guide (1) according to any preceding Claim, wherein the rotatable member (7) is a wheel (22) comprising a concave profile and wherein the wheel (22) is arranged such that, in use, the line (4) sits within the concave profile and is guided by the concave profile.

6. A guide (1) according to any preceding Claim, wherein the through passage (6) comprises a pair of elongate sides (18, 19) joined by a pair of end portions (20, 21), and the at least one chamfered edge portion (8) is formed in an end portion (20, 21).

7. A guide (1) according to any preceding Claim, wherein the chamfered edge portion (8) comprises a straight profile, a curved profile, or a profile comprising a straight portion and a curved portion.

8. A guide (1) according to any preceding Claim, wherein the body (5) is adapted for mounting in a complementary aperture (14) in the wall (15) of the fishing pole (3) and comprises a main part (13) adapted to be received in the aperture (14), and a flange (16) part adapted to engage with the external surface (17) of wall (15).

9. A fishing pole (3) comprising:
at least one hollow section having an aperture (14) in a wall (15) of the section; and
a guide (1) as claimed in any one of Claims 1 to 8 inserted in the aperture (14).

10. A fishing pole (3) as claimed in Claim 9, wherein the chamfered edge portion (8) of the through passage (6) is adjacent a first end of the at least one hollow section such that, in use, the line (4) passes into the at least one hollow section through a second end of the at least one hollow section, opposite the first end, and is guided out of the pole (3) between the chamfered edge and the rotatable member (7).

11. A fishing pole (3) as claimed in Claim 9 or Claim 10, wherein the guide (1) is permanently fixed to the fishing pole (3) or the guide (1) is detachably fixed to the fishing pole (3).

12. A kit of parts comprising:
at least one hollow section of a fishing pole (3) having an aperture (14) in a wall (15); and
a guide (1) according to any of claims 1 to 8, the guide (1) adapted for insertion in the aperture (14).

## Patentansprüche

1. Eine Führung (1) für eine Schnur (4) an einer Angelrute (3), die Führung (1) ist für den Einsatz in einer Wand (15) einer hohlen Angelrute (3) angepasst und weist Folgendes auf:
einen Körper (5), der mit einem Durchgang (6) geformt ist, mindestens ein peripherer Randabschnitt (8) des Durchgangs (6) ist dabei abgeschrägt; und
**dadurch gekennzeichnet, dass** die Führung darüberhinaus Folgendes aufweist
ein drehbares Teil (7), das im Körper (5) für die Drehung im Durchgang (6) montiert ist,
so dass im Betrieb eine Schnur (4) von der Innenseite der Rute (3) über die Oberfläche des drehbaren Teils (7) und zwischen dem drehbaren Teil (7) und dem mindestens einen abgeschrägten Randabschnitt (8) zur Außenseite der Rute (3) läuft.

2. Eine Führung (1) gemäß Anspruch 1, wobei der Körper (5) und der Durchgang (6) jeweils eine längliche Kontur haben und wobei die Führung (1) so angepasst ist, dass sie in die Wand (15) der Angelrute (3) eingesetzt wird, so dass sich der Körper (5) und der Durchgang (6) in Richtung der Länge der Angelrute (3) ausdehnen.

3. Eine Führung (1) gemäß Anspruch 2, wobei das drehbare Teil (7) für die Drehung auf einer Achse montiert ist, die quer zur Länge des Körpers (5) und des Durchgangs (6) verläuft.

4. Eine Führung (1) gemäß eines der vorhergehenden Ansprüche, wobei das drehbare Teil (7) so angeordnet ist, dass es durch Bewegung der Schnur (4) durch den Durchgang (6) gedreht werden kann.

5. Eine Führung (1) gemäß eines der vorhergehenden Ansprüche, wobei das drehbare Teil (7) ein Rad (22) ist, das ein konkaves Profil aufweist und wobei das Rad (22) so angeordnet ist, dass im Betrieb die Schnur (4) innerhalb des konkaven Profils sitzt und durch das konkave Profil geführt wird.

6. Eine Führung (1) gemäß eines der vorhergehenden Ansprüche, wobei der Durchgang (6) ein Paar länglicher Seiten (18, 19) aufweist, die durch ein Paar von Endabschnitten (20, 21) verbunden sind, und der mindestens eine abgeschrägte Randabschnitt (8) in einem Endabschnitt (20, 21) geformt wird.

7. Eine Führung (1) gemäß eines der vorhergehenden Ansprüche, wobei der abgeschrägte Randabschnitt (8) ein gerades Profil, ein gewölbtes Profil oder ein Profil aufweist, das einen geraden Abschnitt und einen gewölbten Abschnitt aufweist.

8. Eine Führung (1) gemäß eines der vorhergehenden Abschnitte, wobei der Körper (5) so angepasst ist, dass er in einer komplementären Öffnung (14) in der Wand (15) der Angelrute (3) montiert werden kann und einen Hauptteil (13) aufweist, der so angepasst ist, dass er in die Öffnung (14) aufgenommen werden kann und einen Flansch-Teil (16), der so angepasst ist, dass er sich mit der Außenfläche (17) der Wand (15) verbindet.

9. Eine Angelrute (3), die Folgendes aufweist:
mindestens einen hohlen Abschnitt mit einer Öffnung (14) in einer Wand (15) des Abschnitts; und
eine Führung (1) gemäß eines der Ansprüche 1 bis 8, die in die Öffnung (14) eingesetzt ist.

10. Eine Angelrute (3) gemäß Anspruch 9, wobei der abgeschrägte Randabschnitt (8) des Durchgangs (6) neben dem ersten Ende des mindestens einen hohlen Abschnitts liegt, so dass im Betrieb die Schnur (4) in den mindestens einen hohlen Abschnitt durch ein zweites Ende des mindestens einen hohlen Abschnitts, gegenüber dem ersten Ende, läuft und aus der Rute (3) zwischen dem abgeschrägten Rand und dem drehbaren Teil (7) geführt wird.

11. Eine Angelrute (3) gemäß Anspruch 9 oder Anspruch 10, wobei die Führung (1) permanent an der Angelrute (3) befestigt ist oder die Führung (1) abnehmbar an der Angelrute (3) befestigt ist.

12. Ein Teilesatz, der Folgendes aufweist:
mindestens einen hohlen Abschnitt einer Angelrute (3) mit einer Öffnung (14) in einer Wand (15); und
eine Führung (1) gemäß eines der Ansprüche 1 bis 8, die Führung (1) ist dabei so angepasst, dass sie in die Öffnung (14) eingesetzt werden kann.

## Revendications

1. Un guide (1) destiné à une ligne (4) d'une canne à pêche (3), le guide (1) étant adapté à l'insertion dans une paroi (15) d'une canne à pêche creuse (3) et comprenant :
un corps (5) formé avec un passage traversant (6), au moins une partie du bord périphérique (8) du passage traversant (6) étant chanfreinée ; et
**caractérisé en ce que** le guide comprend en outre
un élément rotatif (7) monté dans le corps (5) destiné à la rotation dans le passage (6)
de sorte que, lors de son utilisation, une ligne (4) passe depuis l'intérieur de la canne (3) au-dessus de la surface de l'élément rotatif (7) et entre l'élément rotatif (7) et la ou les parties de bords chanfreinées (8) à l'extérieur de la canne (3).

2. Un guide (1) selon la revendication 1, dans lequel le corps (5) et le passage traversant (6) possèdent chacun un contour allongé et dans lequel le guide (1) est adapté à l'insertion dans la paroi (15) de la canne à pêche (3), de sorte que le corps (5) et le passage traversant (6) soient de forme allongée dans le sens de la longueur de la canne à pêche (3).

3. Un guide (1) selon la revendication 2, dans lequel l'élément rotatif (7) est monté pour une rotation autour d'un axe transversal à la longueur du corps (5) et au passage traversant (6).

4. Un guide (1) selon l'une quelconque des revendications précédentes, dans lequel l'élément rotatif (7) est agencé de manière à être tourné par le mouvement de la ligne (4) à travers le passage traversant (6).

5. Un guide (1) selon l'une quelconque des revendications précédentes, dans lequel l'élément rotatif (7) est une roue (22) comprenant un profil concave et dans lequel la roue (22) est agencée de sorte que, lors de son utilisation, la ligne (4) se trouve à l'intérieur du profil concave et soit guidée par le profil concave.

6. Un guide (1) selon l'une quelconque des revendications précédentes, dans lequel le passage traversant (6) comprend une paire de côtés allongés (18, 19) joints par une paire de parties d'extrémité (20, 21) et la ou les parties de bords chanfreinés (8) sont formées dans une partie d'extrémité (20, 21).

7. Un guide (1) selon l'une quelconque des revendications précédentes, dans lequel les parties de bords chanfreinées (8) comprennent un profil droit, un profil incurvé ou un profil comprenant une partie droite et une partie incurvée.

8. Un guide (1) selon l'une quelconque des revendications précédentes, dans lequel le corps (5) est adapté au montage dans une ouverture complémentaire (14) dans la paroi (15) de la canne à pêche (3) et comprend une partie principale (13) adaptée à être reçue dans l'ouverture (14) et une partie de bride (16) adaptée à venir en contact avec la surface externe (17) de la paroi (15).

9. Une canne à pêche (3) consistant en :
au moins une section creuse présentant une ouverture (14) dans une paroi (15) de la section ; et
un guide (1), tel que revendiqué dans une quelconque des revendications 1 à 8, inséré dans l'ouverture (14).

10. Une canne à pêche (3), telle que revendiquée dans la revendication 9, dans laquelle la partie de bord chanfreinée (8) du passage traversant (6) est adjacente à une première extrémité du ou des sections creuses de sorte que, lors de son utilisation, la ligne (4) passe dans la ou les sections creuses à travers une seconde extrémité de la ou des sections creuses, en regard de la première extrémité et est guidée hors de la canne (3) entre le bord chanfreiné et l'élément rotatif (7).

11. Une canne à pêche (3), telle que revendiquée dans la revendication 9 ou la revendication 10, dans laquelle le guide (1) est fixé à demeure à la canne à pêche (3) ou le guide (1) est fixé de manière détachable à la canne à pêche (3).

12. Un kit de pièces consistant en :
au moins une section creuse d'une canne à pêche (3) présentant une ouverture (14) dans une paroi (15) ; et
un guide (1) selon l'une quelconque des revendications 1 à 8, le guide (1) est adapté à l'insertion dans l'ouverture (14).
